(19) Europäisches Patentamt
European Patent Office
Office européen des brevets

(11) Veröffentlichungsnummer : **0 332 993 B1**

(12) **EUROPÄISCHE PATENTSCHRIFT**

(45) Veröffentlichungstag der Patentschrift : **08.01.92 Patentblatt 92/02**

(21) Anmeldenummer : **89103974.5**

(22) Anmeldetag : **07.03.89**

(51) Int. Cl.[5] : **C08L 57/00**, C08L 51/04, C08L 25/12, // (C08L25/12, 55:02, 69:00), (C08L57/00, 51:04, 69:00), (C08L51/04, 57:00, 69:00)

(54) **Thermoplastische Formmassen mit guter Verarbeitbarkeit und hoher Zähigkeit.**

(30) Priorität : **17.03.88 DE 3808844**

(43) Veröffentlichungstag der Anmeldung : **20.09.89 Patentblatt 89/38**

(45) Bekanntmachung des Hinweises auf die Patenterteilung : **08.01.92 Patentblatt 92/02**

(84) Benannte Vertragsstaaten : **DE ES FR GB IT NL**

(56) Entgegenhaltungen : **EP-A- 0 222 234**

(73) Patentinhaber : **BAYER AG**
**W-5090 Leverkusen 1 Bayerwerk (DE)**

(72) Erfinder : **Eichenauer, Herbert, Dr.**
**Gustav-Heinemann-Strasse 3**
**W 4047 Dormagen 1 (DE)**
Erfinder : **Leitz, Edgar, Dr.**
**Goethestrasse 63**
**W 4047 Dormagen (DE)**
Erfinder : **Ott, Karl-Heinz, Dr.**
**Paul-Klee-Strasse 54**
**W 5090 Leverkusen (DE)**
Erfinder : **Pischtschan, Alfred, Dr.**
**Zur Eiche 33**
**W 5067 Kürten-Eichhof (DE)**

EP 0 332 993 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

ABS-Polymerisate zeichnen sich durch ein ausgewogenes Verhältnis von Zähigkeit, Wärmeformbeständigkeit, Verarbeitbarkeit und Oberflächenqualität aus. Bei der Herstellung von ABS mit speziellen Eigenschaften, (z.B. hoher Zähigkeit oder Wärmeformbeständigkeit), können diese erwünschten Eingenschaften in der Regel nur bei gleichzeitigen Einbußen bei anderen Eigenschaften erzielt werden.

Ein besonderes Problem stellt die Herstellung von ABS-Polymerisaten mit sehr hoher Kerbschlagzähigkeit dar :

Beide praktisch angewandten Methoden :

a) Erhöhung der Pfropfkautschukgehalts, b) Erhöhung des Molekulargewichts des Styrol/Acrylnitril-Copolymerisats (Harzmatrix) sowie deren Kombination führen zu einer starken Erhöhung der Schmelzviskosität, d.h. zu einer deutlich schlechteren thermoplastischen Verarbeitbarkeit sowie damit einhergehenden Oberflächenstörungen.

Es wurde nun gefunden, daß ABS-Polymerisate mit sehr hoher Zähigkeit und gleichzeitiger ausgezeichneter Verarbeitbarkeit durch Zusatz eines speziellen, sequenzartig aufgebauten Copolymerisats erhalten werden.

Gegenstand der vorliegenden Erfindung sind thermoplastische Formmassen, enthaltend

A) 5-90 Gew.-Teile, bevorzugt 10-80 Gew.-Teile und besonders bevorzugt 20-75 Gew.-Teile, eines oder mehrerer kautschukfreier, thermoplastischer Polymerisate von Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat oder Mischungen daraus,

B) 5-90 Gew.-Teile, bevorzugt 10-80 Gew.-Teile und besonders bevorzugt 15-60 Gew.-Teile, eines oder mehrerer Pfropfpolymerisate aus

B.1) 5-90 Gew.-Teilen, vorzugweise 30-80 Gew.-Teilen, Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat oder Mischungen daraus auf

B.2) 95-10 Gew.-Teile, vorzugsweise 70-20 Gew.-Teile, eines Kautschuks mit einer Glastemperatur ≤ 10°C und

C) 0,25-40 Gew.-Teile, bevorzugt 0,5-30 Gew.-Teile, eines Copolymeren mit sequenzartigem Aufbau der idealisierten Formel (I)

$$(A\text{-}X\text{-}B)_n \quad (I),$$

mit n = 1 bis 20, vorzugsweise 1 bis 10, wobei A — Polymerisat eines cyclischen Carbonats der Formel (II) ("Block A")

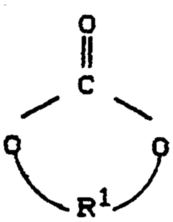

(II)

mit

$R^1$ = $-(CH_2)_n-$ mit n = 3-12
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

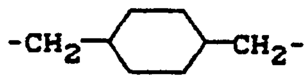, 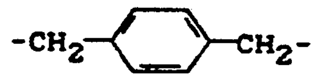,

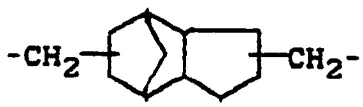,

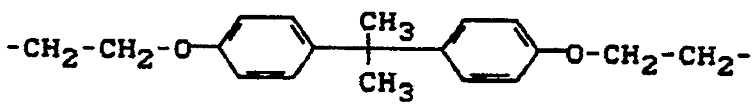,

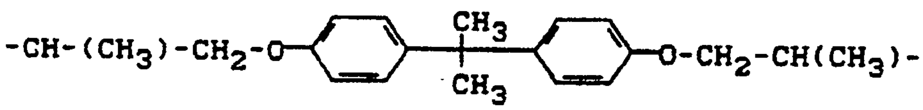,

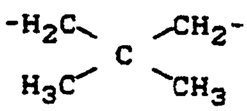, 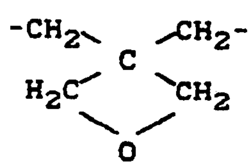,

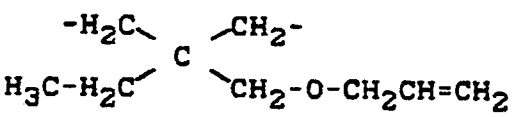, 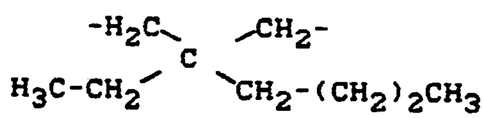

oder der Formel (III)

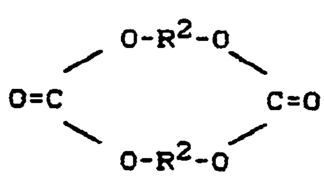 (III)

worin

R² = —$(CH_2)_n$— mit n = 4-12
—$CH_2CH_2OCH_2CH_2$—
—$CH_2CH_2OCH_2CH_2OCH_2CH_2$—
B = Polymerisat eines cyclischen Esters mit der Formel (IV) ("Block B")

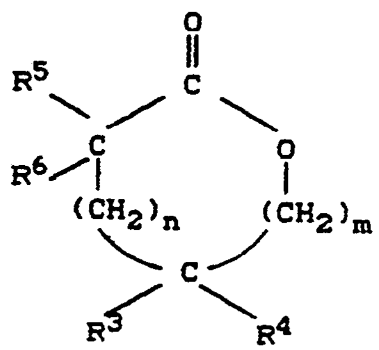

(IV)

mit

| | |
|---|---|
| $R^3$, $R^4$, $R^5$, $R^6$ = | H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$ und |
| m, n | unabhängig voneinander 0, 1, 2, 3, 4, 5 oder 6, |
| X = | Mittelstück, enthaltend sowohl das cyclische Carbonat der Formel (II) und/oder (III) als auch den cyclischen Ester der Formel (IV) in polymerisierter Form, wobei die Konzentration der Struktureinheiten aus den Verbindungen (II) und/oder (III) in Richtung auf — B — und die Konzentration der Struktureinheiten aus den Verbindungen (IV) in Richtung auf — A-kontinuierlich abnimmt ("tapered structure") und wobei der Gehalt an Blöcken A 47,5 bis 99 Gew.-%, vorzugsweise 50 bis 95 Gew.-% (jeweils bezogen auf Gesamtmenge der Blöcke A + B), der Gehalt an Blöcken B 52,5 bis 1 Gew.-%, vorzugsweise 50 bis 5 Gew.-% (jeweils bezogen auf Gesamtmenge der Blöcke A + B), und der Gehalt an Mittelstücken X 5 bis 95 Gew.-%, vorzugsweise 10 bis 80 Gew.-% (jeweils bezogen auf Gesamtmenge A + B + X) beträgt. |

Ein weiterer Erfindungsgegenstand sind Formmassen, die zusätzlich zu A) + B) + C) 1 bis 40 Gew.-Teile (bezogen auf 100 Gew.-Teile A) + B) + C) eines linearen aliphatischen Polycarbonats (D) enthalten.

Die erfindungsgemäßen Mischungen aus Copolymerisat, Pfropfpolymerisat, sequenzartig aufgebautem Copolymeren und gegebenenfalls linearem aliphatischem Polycarbonat können die üblichen Zusatzstoffe wie z.B. Flammschutzmittel, Stabilisatoren, Entformungsmittel, Pigmente, Gleitmittel, Antistatika, Füllstoffe in den üblichen Mengen enthalten.

Durch den Zusatz des Sequenzpolymeren C) werden Formmassen vom ABS-Typ erhalten, die neben einer hohen Zähigkeit eine verbesserte Fließfähigkeit und somit eine verbesserte Verarbeitbarkeit haben. Dies bedeutet, daß auch großformatige Spritzgußteile bzw. solche mit komplizierter Struktur, z.B. Computergehäuse, Automobilteile, aufgrund der verbesserten Fließfähigkeit leichter bzw. unter geringerer Temperaturbelastung hergestellt werden können.

Erfindungsgemäß geeignete thermoplastische Polymerisate A) sind solche von Styrol, α-Methylstyrol, p-Methylstyrol, Vinyltoluol, Halogenstyrol, Methylacrylat, Methylmethacrylat, Acrylnitril, Methacrylnitril, Maleinsäureanhydrid, N-substituiertes Maleinimid oder Mischungen daraus.

Die thermoplastischen Polymerisate A) sind harzartig, thermoplastisch und kautschukfrei. Besonders bevorzugte Polymerisate A) sind solche aus Styrol, Methylmethacrylat, Styrol/Acrylnitril-Gemischen, Styrol/Acrylnitril/Methylmethacrylat-Gemischen, Styrol/Methylmethacrylat-Gemischen, Acrylnitril/Methylmethacrylat-Gemischen, α-Methylstyrol/Acrylnitril-Gemischen, Styrol-α-Methylstyrol/Acrylnitril-Gemischen, α-Methylstyrol/Methylmethacrylat/Acrylnitril-Gemischen, Styrol/α-Methylstyrol/Methylmethacrylat-Gemischen, Styrol/α-Methylstyrol/Methylmethacrylat/Acrylnitril-Gemischen, Styrol/Maleinsäureanhydrid-Gemischen, Methylmethacrylat/Maleinsäureanhydrid-Gemischen, Styrol/Methylmethacrylat/Maleinsäureanhydrid-Gemischen.

Die thermoplastischen Polymerisate A) sind bekannt und lassen sich durch radikalische Polymerisation, insbesondere durch Emulsions-, Suspensions-, Lösungs- oder Massepolymerisation herstellen. Sie besitzen vorzugsweise Molekulargewichte $\overline{M}_w$ von 20000 bis 200000 und Grenzviskositäten [η] von 20 bis 110 ml/g (gemessen in Dimethylformamid bei 25°C).

Zur Herstellung der Pfropfpolymerisate B) als Pfropfgrundlagen geeignete Kautschuke sind insbesondere Polybutadien, Butadien/Styrol-Copolymerisate, Butadien/Acrylnitril-Copolymerisate, Polyisopren, EPM-Kautschuke (Ethylen/Propylen-Kautschuke), EPDM-Kautschuke (Ethylen/Propylen/Dien-Kautschuke, die als Dien ein nichtkonjugiertes Dien wie z.B. Hexadien-1,5 oder Norbornadien in kleinen Mengen enthalten) oder Alkylacrylatkautschuke auf der Basis von $C_1$-$C_8$-Alkylacrylaten, insbesondere Ethyl-, Butyl-, Ethylhexylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Alkylacrylatkautschuke können auch kleinere Mengen, vorzugsweise bis zu 5 Gew.-% (bezogen auf Kautschukgewicht) vernetzend wirkender ethylenisch ungesättigter Monomerer einpolymerisiert enthalten. Solche Vernetzer sind z.B. Alkylendiol-diacrylate und -methacrylate, Polyester-diacrylate und -methacrylate, Divinylbenzol, Trivinylbenzol, Triallylcyanurat, Allylacrylat, Allylmethacrylat, Butadien und Isopren. Acrylatkautschuke können auch Kern-Mantel-Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Bevorzugte Kautschuke zur Herstellung der Pfrofpolymerisate B) sind Dien- und Alkylacrylatkautschuke.

Die Kautschuke liegen im Pfropfpolymerisat B) in Form wenigstens partiell vernetzter Teilchen eines mittleren Teilchendurchmessers von 0,05 bis 20,0 µm, bevorzugt von 0,1 bis 2,0 µm und besonders bevorzugt von 0,1 bis 0,8 µm vor. Hierbei bedeutet Teilchendurchmesser immer den mittleren Teilchendurchmesser $d_{50}$, ermittelt durch Ultrazentrifugenmessungen nach W. Scholtan et al., Kolloid-Z, u.Z. Polymere 250 (1972), 782-796.

Die Pfropfpolymerisate B) werden durch radikalische Pfropfpolymerisation der Monomeren B.1) in Gegenwart der zu bepfropfenden Kautschuke B.2) hergestellt.

Bevorzugte Herstellungsverfahren für die Pfropfpolymerisate B) sind Emulsions-, Lösungs-, Masse- oder Suspensionspolymerisation sowie Kombinationen aus diesen Verfahren in an sich bekannter Weise. Besonders bevorzugte Pfropfpolymerisate B) sind die ABS-Polymerisate.

Die sequenzartig aufgebauten Copolymerisate C) sind Verbindungen der idealisierten Formel (I)

$$(A\text{-}X\text{-}B)_n \quad (I)$$

mit n = 1 bis 20, insbesondere 1 bis 10, worin

—A— = Polymerisat eines cyclischen Carbonats der Formel (II) ("Block A")

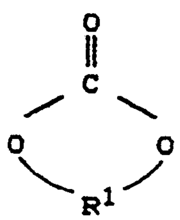

(II)

worin

$R^1$ = $-(CH_2)_n-$ mit n = 3-12
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

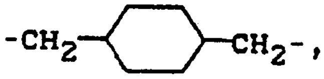, 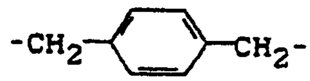,

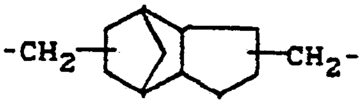,

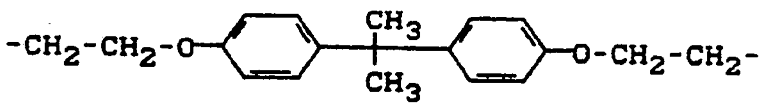,

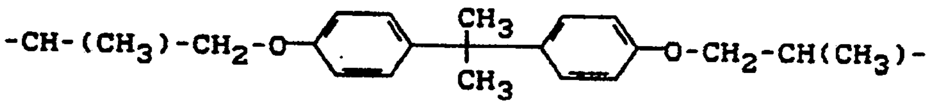,

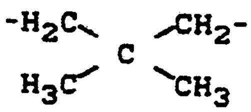, 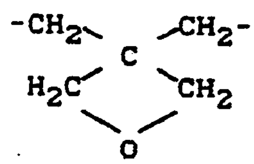,

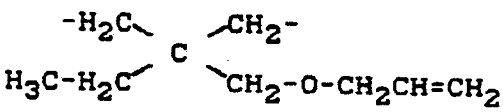, 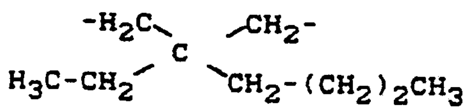

oder der Formel (III)

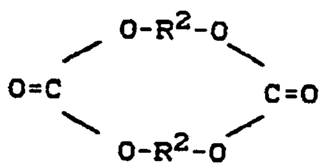 (III)

$R^2$ = $-(CH_2)_n$ mit n = 4-12
$-CH_2CH_2OCH_2CH_2-$
$-CH_2CH_2OCH_2CH_2OCH_2CH_2-$

—B— = Polymerisat eines cyclischen Esters mit der Formel (IV) ("Block B")

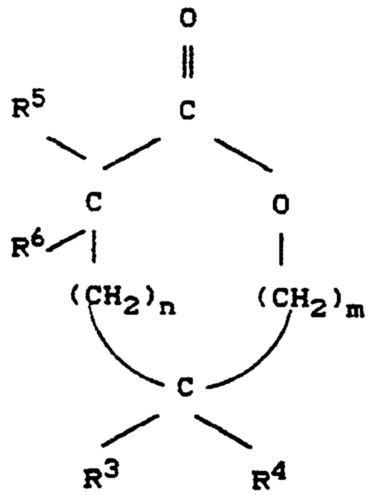

(IV)

mit

| | |
|---|---|
| $R^3$, $R^4$, $R^5$, $R^6$ = | H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$ und |
| m, n | unabhängig voneinander 0, 1, 2, 3, 4, 5 oder 6, |
| X = | Mittelstück, enthaltend sowohl das cyclische Carbonat der Formel (II) und/oder (III) als auch den cyclischen Ester der Formel (IV) in polymerisierter Form, wobei die Konzentration der Struktureinheiten aus den Verbindungen (II) und/oder (III) in Richtung auf — B — und die Konzentration der Struktureinheiten aus den Verbindungen (IV) in Richtung auf — A — kontinuierlich abnimmt ("tapered structure"), bedeutet. |

Der Gehalt an Blöcken A in Polymerkomponente C) beträgt 47,5 bis 99 Gew.-%, vorzugsweise 50 bis 95 Gew.-% (jeweils bezogen auf Gesamtmenge der Blöcke A + B), der Gehalt an Blöcken B beträgt 52,5 bis 1 Gew.-%, vorzugsweise 50 bis 5 Gew.-% (jeweils bezogen auf Gesamtmenge der Blöcke A + B), und der Gehalt an Mittelstücken X mit einer "tapered structure" beträgt 5 bis 95 Gew.-%, vorzugsweise 10 bis 80 Gew.-% (jeweils bezogen auf Gesamtmenge A + B + X).

Die mittleren Molekulargewichte der Blöcke A und B sind 500 bis 1000000, vorzugsweise 1000 bis 500000 und besonders bevorzugt 2000 bis 250000 ; die mittleren Molekulargewichte der Mittelstücke X sind 300 bis 20000, vorzugsweise 500 bis 15000.

Bevorzugte cyclische Carbonate (II) und (III) sind Trimethylenglykolcarbonat, Neopentylglykolcarbonat, 1,4-Butandiolcarbonat sowie dimere Carbonate des Pentandiols oder des Hexandiols. Besonders bevorzugt ist Neopentylglykolcarbonat. Bevorzugte Lactone (IV) sind ε-Caprolacton und Pivalolacton.

Die Copolymeren lassen sich aus den cyclischen Carbonaten und Estern durch anionische ringöffnende Lösungspolymerisation herstellen. Ein sequentieller Aufbau der Copolymeren wird durch eine stufenweise Zugabe der Carbonat/Ester-Mischung zur polymerisationsaktiven Lösung erreicht.

Bevorzugte Copolymere C) mit sequenzartigem Aufbau sind die gemäß DE-OS 3700193 erhaltenen Produkte mit Molekulargewichten $\overline{M}_w$ im Bereich von 2000 bis 500000, bevorzugt 5000 bis 400000.

Geeignete lineare aliphatische Polycarbonate D) sind Verbindungen der allgemeinen Formel (V)

$$\left[ \overset{\overset{O}{\|}}{C} - O - R^1 - O \right]_x \quad (V)$$

worin

| | |
|---|---|
| $R^1$ | die oben definierten Reste bedeutet und |
| x = | ganze Zahl entsprechend einem Molekulargewicht von 2000 bis 500000 bedeutet. |

Bevorzugtes aliphatisches Polycarbonat D) ist Polyneopentylglykolcarbonat (VI).

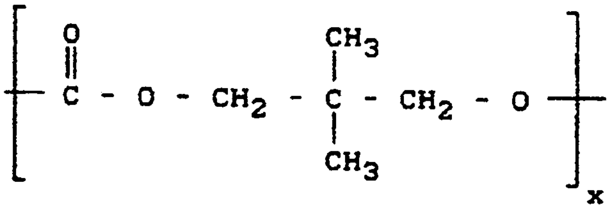

(VI)

Die aliphatischen Polycarbonate D) können nach üblichen Methoden, z.B. durch Umesterung oder Phosgenierung von Diolen (DE-OS 2001091, FR-PS 1391512 DE-OS 1031512, DE-OS 2446107, DE-OS 2605024, EP 002641, DE-OS 2447349), besser aber durch ringöffnende Masse- und Lösungspolymerisation von cyclischen aliphatischen Carbonaten hergestellt werden (DE-OS 1545116, 1545117, 3103135, 3204078).

Das bevorzugte Herstellungsverfahren ist die anionische ringöffnende Lösungspolymerisation von cyclischen aliphatischen Carbonaten bei tiefen Temperaturen gemäß DE-OS 3607625.

Cyclische aliphatische Carbonate für die Herstellung der aliphatischen Polycarbonat-Komponente in den erfindungsgemäßen Formmassen sind Verbindungen der Formel (III) und/oder (IV)

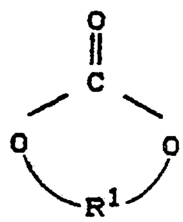

(III) ,

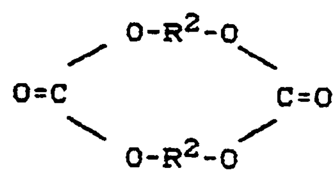

(VI)

worin $R^1$ und $R^2$ die oben angegebenen Reste bedeuten.

Bevorzugt werden Carbonate der Formel (III) verwendet. Besonders bevorzugt ist das Carbonat mit

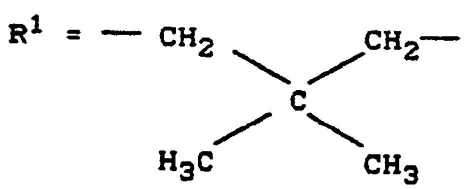

Bevorzugte aliphatische Polycarbonate D) sind die gemäß DE-OS 3607625 erhaltenen Produkte mit Molekulargewichten $\overline{M}_w$ im Bereich von 2000 bis 500000, bevorzugt von 15000 bis 350000.

Die erfindungsgemäßen Mischungen, enthaltend die Komponenten A), B, C), gegebenenfalls D) und gegebenenfalls die üblichen Zusatzstoffe wie Flammschutzmittel, Gleitmittel, Stabilisatoren, Pigmente, Entformungsmittel, Antistatika, Füllstoffe werden hergestellt, indem man die jeweiligen Bestandteile in bekannter Weise simultan oder sukzessive bei Raumtemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Die Formmassen der vorliegenden Erfindung können zur Herstellung von Formkörpern jeder Art verwendet werden, wobei übliche Herstellungsweisen benutzt werden können, insbesondere können Formkörper durch Spritzguß hergestellt werden.

Eine weitere Form der Verarbeitung der erfindungsgemäßen Formmassen ist die Herstellung von Formkörpern durch Tiefziehen aus vorher nach bekannten Verfahren hergestellten Platten oder Folien.

Beispiele

Thermoplastisches Polymerisat A

Statistisches Styrol/Acrylnitril = 72 : 28 — Copolymerisat mit einem $\overline{M}_w$ von ca. 115000 und einer Uneinheitlichkeit $\overline{M}_w/\overline{M}_n - 1 \leq 2{,}0$.

Pfropfpolymerisat B

Pfropfprodukt erhalten durch Emulsionspolymerisation von 50 Gew.-% eines Styrol/Acrylnitril-Gemisches (Gew.-Verhältnis 72 : 28) auf 50 Gew.-% teilchenförmiges Polybutadien mit einem mittleren Teilchendurchmesser ($d_{50}$) von 0,4 µm.

Sequenziert aufgebautes Copolymer C

C 1 : Sequenziert aufgebautes Copolymerisat vom Typ A-X-B, wobei A Polyneopentylglykolcarbonat und B Poly-ε-Caprolacton darstellen. X bezeichnet ein "getapertes" Übergangssegment aus Neopentylglykolcarbonat und ε-Caprolacton. Das Copolymerisat wurde durch ringöffnende anionische Copolymerisation von Neopentylglykolcarbonat und ε-Caprolacton erhalten. Das Gewichtsverhältnis der Monomeren Neopentylglykolcarbonat und ε-Caprolacton im Copolymerisat beträgt 93 : 7 (ermittelt durch $^1$H-NMR-Spektroskopie). Die relative Lösungsviskosität $\eta_{rel}$ des Polymeren beträgt 2,72 (2 Gew.-%ige Lösung in $CH_2Cl_2$ bei 20°C).

C 2 : wie C 1, Gewichtsverhältnis Neopentylglykolcarbonat : ε-Caprolacton = 82 : 18 ; $\eta_{rel}$ = 3,17

C 3 : wie C 1, Gewichtsverhältnis Neopentylglykolcarbonat : ε-Caprolacton = 80 : 20 ; $\eta_{rel}$ = 3,44

C 4 : wie C 1, Gewichtsverhältnis Neopentylglykolcarbonat : ε-Caprolacton = 61 : 39 ; $\eta_{rel}$ = 3,30

C 5 : wie C 1, Gewichtsverhältnis Neopentylglykolcarbonat : ε-Caprolacton = 50 : 50 ; $\eta_{rel}$ = 3,10

Polycarbonat D

Aliphatisches Polycarbonat auf Basis von Neopentylglykol (2,2-Dimethylpropandiol (1,3)) erhalten durch ringöffnende anionische Polymerisation von Neopentylglykolcarbonat mit einer relativen Lösungsviskosität $\eta_{rel}$ von 3,17 (2 Gew.-%ige Lösung in $CH_2CL_2$ bei 20°C).

Die Compoundierung der Einsatzkomponenten erfolgte auf einem 1,3 l Innenkneter bei Temperaturen zwischen 160°C und 200°C. Die Herstellung der Formkörper erfolgte auf einer Spritzgießmaschine bei 240°C.

Die Kerbschlagzähigkeit ($a_k$) wurde bei Raumtemperatur nach DIN 53 453 (Einheit : kJ/m$^2$) ermittelt, die Bestimmung der Verarbeitbarkeit erfolgte durch Messung des notwendigen Fülldruckes (siehe F. Johannaber, Kunststoffe 74 (1984), 1, Seiten 2-5).

In Tabelle 1 sind die Zusammensetzungen der untersuchten Formmassen sowie die erhaltenen Prüfdaten zusammengestellt. Gegenüber den Vergleichsversuchen besitzen die erfindungsgemäßen Einstellungen niedrigere Fülldruckwerte d.h. bessere Verarbeitbarkeit sowie ein deutlich erhöhtes Zähigkeitsniveau.

**T a b e l l e 1** Zusammensetzungen und Prüfdaten der Formmassen

| Beispiel Nr. | A Gew.-Teile | B Gew.-Teile | C 1 Gew.-Teile | C 2 Gew.-Teile | C 3 Gew.-Teile | C 4 Gew.-Teile | C 5 Gew.-Teile | D Gew.-Teile | $a_k$ $kJ/m^2$ | Fülldruck ($240^0$ C) bar |
|---|---|---|---|---|---|---|---|---|---|---|
| 1. | 45 | 40 | 15 | -- | -- | -- | -- | -- | 21,0 | 338 |
| 2. | 45 | 40 | -- | 15 | -- | -- | -- | -- | 24,1 | 338 |
| 3. *) | 50 | 40 | -- | -- | 10 | -- | -- | -- | 22,6 | 346 |
| 4. *) | 40 | 40 | -- | -- | 20 | -- | -- | -- | 27,0 | 334 |
| 5. *) | 60 | 30 | -- | -- | 10 | -- | -- | -- | 21,1 | 324 |
| 6. | 45 | 40 | -- | -- | -- | 15 | -- | -- | 27,3 | 344 |
| 7. | 45 | 40 | -- | -- | -- | -- | 15 | -- | 26,7 | 326 |
| 8. | 30 | 40 | -- | -- | 20 | -- | -- | 10 | 27,3 | 318 |
| 9. | 40 | 30 | -- | -- | 20 | -- | -- | 10 | 21,1 | 287 |
| 10. Vergleich*) | 60 | 40 | -- | -- | -- | -- | -- | -- | 17,1 | 375 |
| 11. Vergleich | 60 | 40 | -- | -- | -- | -- | -- | -- | 18,0 | 380 |

*) Zusatz von 0,1 Gew.-Teilen eines Silikonöls in der Compoundierstufe

## Patentansprüche

1. Thermoplastische Formmassen enthaltend

A) 5-90 Gew.-Teile eines oder mehrerer kautschukfreier, thermoplastischer Polymerisate von Styrol, α-Methylstyrol, kernsubstitueirtem Styrol, Methylmethacrylat, Acrylnitril, Methacrylnitril, Maleinsäureanhydrid, N-substitueirtem Maleinimid, Vinylacetat, oder Mischungen daraus,

B) 5-90 Gew.-Teile eines oder mehrerer Pfropfpolymerisate aus

B.1) 5-90 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat oder Mischungen daraus auf

B.2) 95-10 Gew.-Teile eines Kautschuks mit einer Glastemperatur ≤ 10°C und

C) 0,25-40 Gew.-Teile eines Copolymeren mit sequenzartigem Aufbau der idealisierten Formel (I)

$$(A\text{-}X\text{-}B)_n \quad (I),$$

mit n = 1 bis 20, wobei A = Polymerisat eines cyclischen Carbonats der Formel (II) ("Block A")

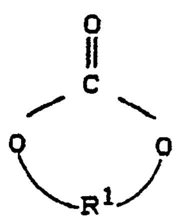 (II)

mit

$R^1$ = $-(CH_2)_n-$ mit n = 3-12,
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

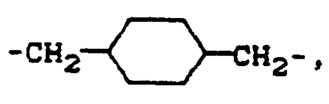 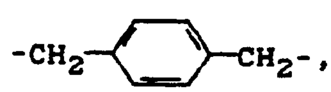

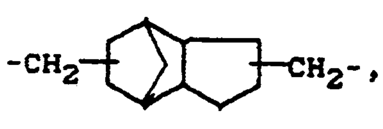

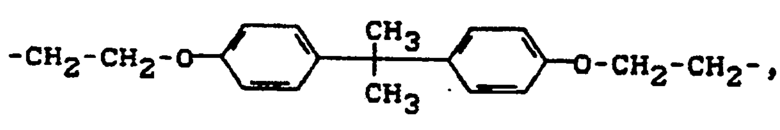

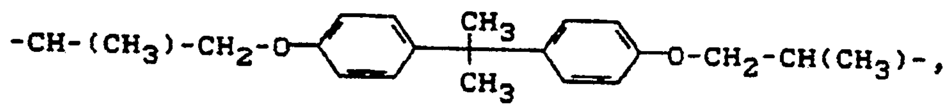,

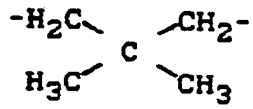,

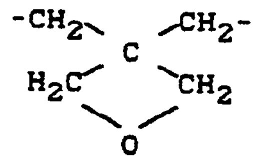,

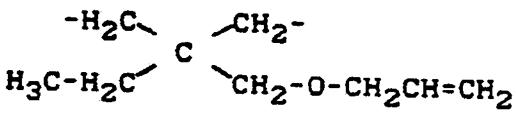,

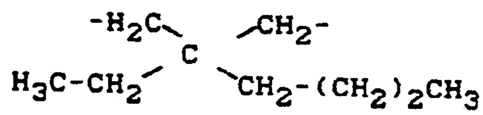

oder der Formel (III)

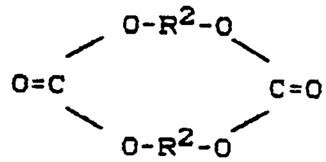

(III)

worin

R² = —$(CH_2)_n$— mit n = 4-12,
—$CH_2CH_2OCH_2CH_2$—,
—$CH_2CH_2OCH_2CH_2OCH_2CH_2$—,

B = Polymerisat eines cyclischen Esters mit der Formel (IV) ("Block B")

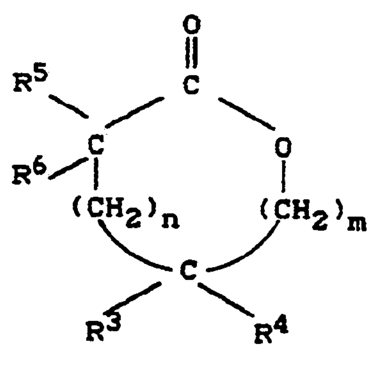

(IV)

mit

$R^3$, $R^4$, $R^5$, $R^6$ = H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$ und

m, n unabhängig voneinander 0, 1, 2, 3, 4, 5 oder 6,

X = Mittelstück, enthaltend sowohl das cyclische Carbonat der Formel (II) und/oder (III) als auch den cyclischen Ester der Formel (IV) in polymerisierter Form, wobei die Konzentration der Struktureinheiten aus den Verbindungen (II) und/oder (III) in Richtung auf — B — und die Konzentration der Struktureinheiten aus den Verbindungen (IV) in Richtung auf — A — kontinuierlich abnimmt ("tapered structure") und wobei der Gehalt an Blöcken A 47,5 bis 99 Gew.-%, (bezogen auf Gesamtmenge der Blöcke A + B), der Gehalt an

Blöcken B 52,5 bis 1 Gew.-%, (bezogen auf Gesamtmenge der Blöcke A + B), und der Gehalt an Mittelstücken X 5 bis 95 Gew.-%, (bezogen auf Gesamtmenge A + B + X) beträgt.

2. Formmassen gemäß Anspruch 1, dadurch gekennzeichnet, daß zusätzlich zu A) + B) + C) 1 bis 40 Gew.-Teile (bezogen auf 100 Gew.-Teile A + B + C) eines linearen aliphatischen Polycarbonats (D) enthalten sind.

3. Formmassen gemäß Anspruch 1, in denen C) ein durch anionische ringöffnende Lösungs-Polymerisation hergestelltes Polymerisat ist.

4. Formmassen gemäß Anspruch 2, in denen D) ein durch anionische ringöffnende Masse- und Lösungs-Polymerisation hergestelltes Polymerisat ist.

5. Formmassen gemäß Anspruch 1, in denen C) ein Copolymeres aus 47,5-99 Gew.-% Neopentylglykolcarbonat und 52,5-1 Gew.-% ε-Caprolacton ist.

6. Formmassen gemäß Anspruch 2, in denen D) Polyneopentylglykolcarbonat ist.

## Claims

1. Thermoplastic moulding compounds containing

A) 5 to 90 parts by weight of one or more rubber-free thermoplastic polymers of styrene, α-methyl styrene, nucleus-substituted styrene, methyl methacrylate, acrylonitrile, methacrylonitrile, maleic anhydride, N-substituted maleic imide, vinyl acetate or mixtures thereof,

B) 5 to 90 parts by weight of one or more graft polymers of

B.1) 5 to 90 parts by weight styrene, α-methyl styrene, nucleus-substituted styrene, methyl methacrylate, acrylonitrile, methacrylonitrile, maleic anhydride, N-substituted maleic imide, vinyl acetate or mixtures thereof on

B.2) 95 to 10 parts by weight of a rubber having a glass temperature of ≤ 10°C and

C) 0.25 to 40 parts by weight of a sequential copolymer having the following idealized formula

$$(A\text{-}X\text{-}B)_n \quad (I)$$

in which
n = 1 to 20,
A = polymer of a cyclic carbonate corresponding to formula (II) ("block A")

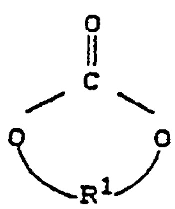

(II)

in which

R¹ =
$-(CH_2)_n-$ with n = 3-12,
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

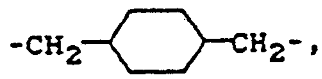

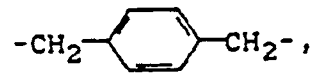

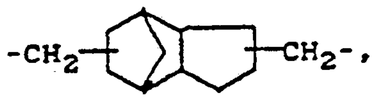

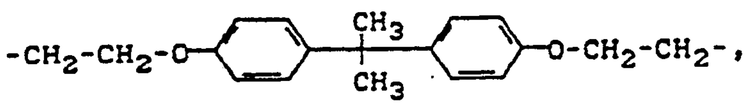

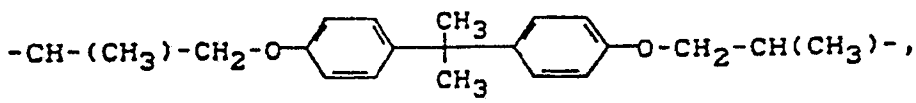

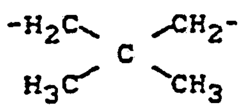

,

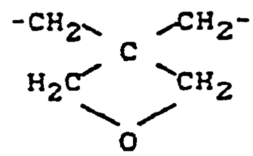

,

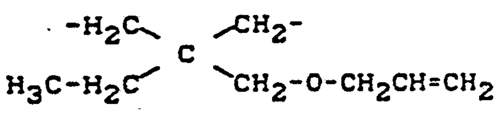

,

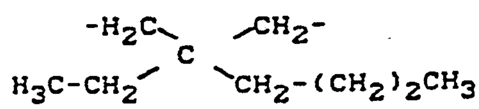

or to formula (III)

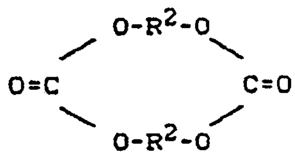

(III)

in which

R² = —$(CH_2)_n$— with n = 4-12,
—$CH_2CH_2OCH_2CH_2$—,
—$CH_2CH_2OCH_2CH_2OCH_2CH_2$—,

B = polymer of a cyclicester corresponding to formula (IV) ("block B")

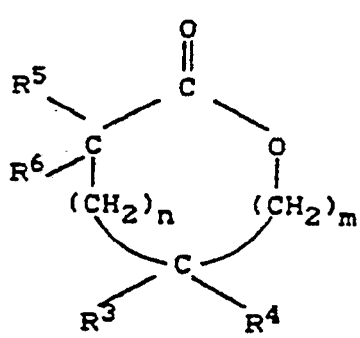

(IV)

in which

$R^3$, $R^4$, $R^5$, $R^6$ = H, $C_{1-6}$ alkyl, $C_{3-6}$ alkenyl, $C_{1-6}$ alkoxy, $C_{1-6}$-alkenoxy-$C_{1-6}$-alkyl, more particularly H, $CH_3$, $C_2H_5$ and

m and n independently of one another = 0, 1, 2, 3, 4, 5 or 6,

X = centre section containing both the cyclic carbonate of formula (II) and/or (III) and the cyclic ester of formula (IV) in polymerized form, the concentration of the structural units of compounds (II) and/or (III) decreasing continuously in the direction of — B — and the concentration of the structural units of compounds (IV) decreasing continuously in the direction of — A — ("tapered structure") and the content of blocks A being from 47.5 to 99% by weight (based on the total quantity of blocks A + B), the content of blocks B being from 52.5 to 1% by weight (based on the total quantity of blocks A + B) and the content of centre sections X being from 5 to 95% by weight (based on the total quantity of A + B + X).

2. Moulding compounds as claimed in claim 1, characterized in that, in addition to A) + B) + C), they contain from 1 to 40 parts by weight (based on 100 parts by weight A + B + C), of a linear aliphatic polycarbonate (D).

3. Moulding compounds as claimed in claim 1, in which C) is a polymer produced by anionic ring-opening solution polymerization.

4. Moulding compounds as claimed in claim 2, in which D) is a polymer produced by anionic ring-opening bulk and solution polymerization.

5. Moulding compounds as claimed in claim 1, in which C) is a copolymer of 47.5 to 99% by weight neopentyl glycol carbonate and 52.5 to 1% by weight ε-caprolactone.

6. Moulding compounds as claimed in claim 2, in which D) is polyneopentyl glycol carbonate.

## Revendications

1. Matières à mouler thermoplastiques, contenant

A) 5 à 90 parties en poids d'un ou plusieurs polymérisats thermoplastiques, dépourvus de caoutchouc, du styrène, de l'alphaméthylstyrène, d'un styrène substitué sur le noyau, du méthacrylate de méthyle, de l'acrylonitrile, du méthacrylonitrile, de l'anhydride d'acide maléique, d'un maléimide substitué sur l'azote, de l'acétate de vinyle ou de leurs mélanges,

B) 5 à 90 parties en poids d'un ou plusieurs polymérisats greffés de

B.1) 5 à 90 parties en poids de styrène, d'alphaméthylstyrène, de styrène substitué sur le noyau, de méthacrylate de méthyle, d'acrylonitrile, de méthacrylonitrile, d'anhydride d'acide maléique, de maléimide substitué sur l'azote, d'acétate de vinyle ou de leurs mélanges sur

B.2) 95 à 10 parties en poids d'un caoutchouc de température de transition vitreuse inférieure ou égale à 10°C et

C) 0,25 à 40 parties en poids d'un copolymère a structure séquencée de formule théorique (I)

$$(A\text{-}X\text{-}B)_n \quad (I)$$

dans laquelle

n a une valeur de 1 à 20, A représentant un polymérisat d'un carbonate cyclique de formule (II) ("Séquence A")

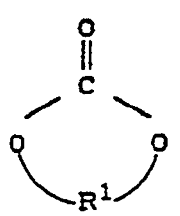

(II)

où

$R^1$ représente $—(CH_2)_n—$ avec n = 3-12,

$—CH_2CH_2CH(CH_3)—$,
$—CH_2CH_2OCH_2CH_2—$,
$—CH_2CH_2OCH_2CH_2OCH_2CH_2—$,
$—CH_2CH(CH_3)CH_2CH_2C(CH_3)_2CH_2—$,

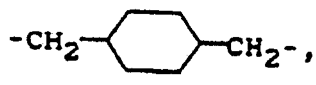 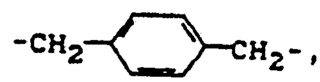

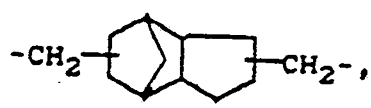

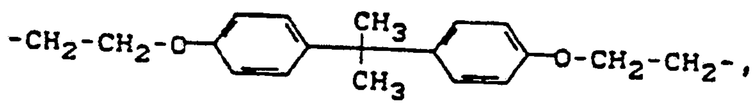

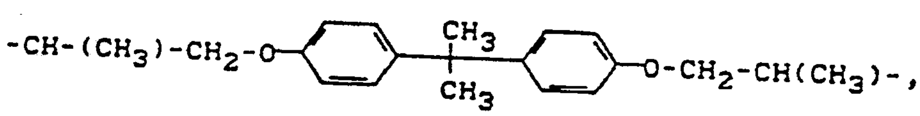

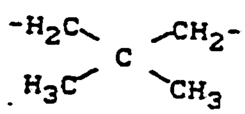 , 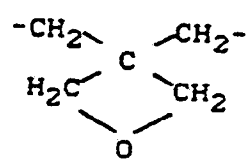 ,

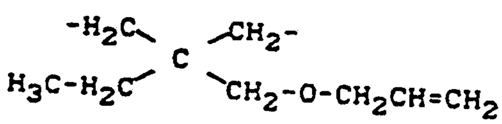 , 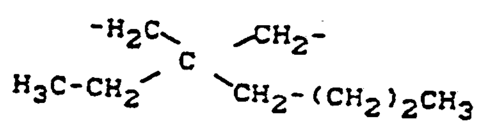

ou de formule (III)

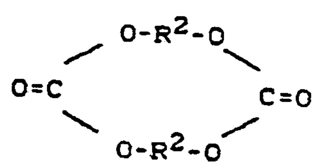 (III)

dans laquelle

R² représente $—(CH_2)_n—$ avec n = 4-12,
$—CH_2CH_2OCH_2CH_2—$,
$—CH_2CH_2OCH_2CH_2OCH_2CH_2—$,

B est un polymérisat d'un ester cyclique de formule (IV) (" séquence B")

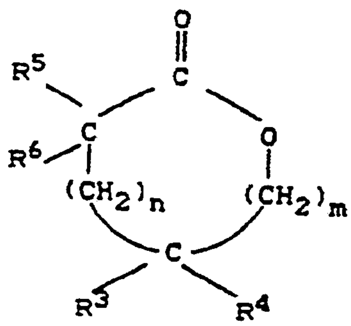

(IV)

dans laquelle

| | |
|---|---|
| $R^3$, $R^4$, $R^5$, $R^6$ | représentent H, un groupe alkyle en $C_1$ à $C_6$, alcényle en $C_3$ à $C_6$, alkoxy en $C_1$ à $C_6$, (alcénoxy en $C_1$ à $C_6$)-(alkyle en $C_1$ à $C_6$), notamment H, $CH_3$, $C_2H_5$ et |
| m, n | ont indépendamment l'un de l'autre la valeur 0, 1, 2, 3, 4, 5 ou 6, |
| X représente | un élément central contenant tant le carbonate cyclique de formule (II) et/ou de formule (III) que l'ester cyclique de formule (IV) sous la forme polymérisée, la concentration des motifs structuraux dérivés des composés (II) et/ou (III) diminuant de façon continue dans la direction de — B — et la concentration des motifs structuraux dérivés des composés (IV) diminuant de façon continue dans la direction de — A — ("tapered structure") et la teneur en séquences A s'élève à 47,5-99% en poids (par rapport à la quantité totale des séquences A + B), la teneur en séquences B s'élève à 52,5-1% en poids (par rapport à la teneur totale en séquences A + B) et la teneur en éléments centraux X s'élève à 5-95% en poids (par rapport à la quantité totale A + B + X). |

2. Matières à mouler suivant la revendication 1, caractérisées en ce qu'elles contiennent en plus de A + B + C 1 à 40 parties en poids (pour 100 parties en poids de A + B + C) d'un polycarbonate aliphatique linéaire (D).

3. Matières à mouler suivant la revendication 1, dans lesquelles C est un polymérisat produit par polymérisation en solution anionique décyclisante.

4. Matières à mouler suivant la revendication 2, dans lesquelles D est un polymérisat produit par polymérisation en masse ou en solution anionique décyclisante.

5. Matières à mouler suivant la revendication 1, dans lesquelles C est un copolymère de 47,5-99% en poids de carbonate de néopentylglycol et de 52,5-1% en poids d'ε-caprolactone.

6. Matières à mouler suivant la revendication 2, dans lesquelles D est un polycarbonate de néopentylglycol.